## Europäisches Patentamt
## European Patent Office
## Office européen des brevets

(19)

(11) Publication number: **0 120 574**
**A1**

(12) # EUROPEAN PATENT APPLICATION

(21) Application number: **84300891.3**

(22) Date of filing: **13.02.84**

(51) Int. Cl.³: **A 01 F 29/00**

(30) Priority: **14.02.83 GB 8304035**

(43) Date of publication of application:
**03.10.84 Bulletin 84/40**

(84) Designated Contracting States:
**BE DE FR GB IT NL SE**

(71) Applicant: **Fosse Agriculture Limited**
**Delves Lane Industrial Estate**
**Consett Durham. DH8 9HT(GB)**

(72) Inventor: **Jarrett, Michael Richard**
**215 Leamington Road**
**Coventry West Midlands(GB)**

(74) Representative: **Bannerman, David Gardner et al,**
**Withers & Rogers 4 Dyer's Buildings Holborn**
**London, EC1N 2JT(GB)**

(54) **Bale chopping and distributing apparatus.**

(57) Cutting and distributing apparatus for bales of straw, hay, silage or the like, comprising a container(3) for one or more bales, cutting means (6) for cutting lengths of straw from the bale or bales, a conduit (9) for conducting the cut lengths away from the cutting means to a fan (11) by means of which they are discharged from the apparatus through an outlet passage (20) characterised in that the conduit has air inlet means (10) so arranged that the fan (11) draws air into the conduit (9) through the inlet means (10) and the cut lengths are entrained by the resulting air current air current and conveyed thereby to the fan (11), whereupon they are blown out through the outlet passage(20).

This apparatus enabled the bales to be cut up to provide lengths of straw, hay or silage suitable for animal feed or bedding.

FIG.1.

EP 0 120 574 A1

## Bale Chopping and Distributing Apparatus

This invention relates to chopping and distributing apparatus for straw or hay or silage bales.    Straw and hay is normally stored in bales which are either of the older small rectangular type, or more commonly nowadays of the larger round or rectangular type.    However, the bales are preferably chopped into individual pieces of hay, straw or silage of a particular length, to enable the straw to be used as feed or bedding for farm animals.

The conventional type of chopping and distributing apparatus for straw or hay comprises a towable wheeled chassis carrying a tub to receive one or more bales rotatable about a vertical axis, a rotatable cutting means beneath the tub for gradually cutting up the rotating bale into short lengths of straw or hay, a blower for discharging the cut straw or hay from the machine, and a rotatable auger for conveying the cut straw or hay from the cutting means to the blower.

Unfortunately, straw, hay and silage are not uniform materials.    For example, straw varies depending on the type of grain (e.g. wheat, barley) from which it has been derived, and hay varies depending on the variety of grass used.    Also, straw, hay and silage are sometimes wet and sometimes dry, depending on the weather and storage conditions.    These variations cause a great deal of difficulty with auger conveyors, because these will not satisfactorily handle cut lengths of straw, hay or silage with widely differing properties. Straw, hay or silage which is unsuitable for a particular auger conveyor can cause jamming of the auger.

We have now discovered that if the auger conveyor is replaced by an air conveyor in which a current of air conveys the cut lengths away from the cutting means to enable them to be blown out of the apparatus, these problems are overcome. The air conveyor can handle a wide variety of different types of straw, hay, or silage in different states of dryness without becoming clogged.

According to this invention we therefore provide cutting and distributing apparatus for bales of straw, hay, silage or the like, comprising a container for one or more bales, cutting means for cutting lengths of straw, hay, silage or the like from the bale or bales, a conduit for conducting the cut lengths away from the cutting means to a fan by means of which they are discharged from the apparatus through an outlet passage, characterised in that the conduit has air inlet means so arranged that the fan draws air into the conduit through the inlet means and the cut lengths are entrained by the resulting air current which conveys them to the fan, whereupon they are blown out through the outlet passage.

Preferably, the container comprises a tub (which may be cylindrical or any other convenient shape) mounted to be rotatably driven about a vertical axis, and provided with means for gripping a bale or bales contained within it to ensure that it or they rotate with the tub. The cutting means preferably comprises at least one horizontal rotatably-driven shaft provided with cutter blades and mounted beneath the tub so that as the tub turns its contents are carried over the rotating cutter blades and the bales are therefore gradually cut up.

The fan is preferably arranged so that the air carrying the cut lengths of straw, hay or silage is drawn into the fan parallel to or along the axis, and is discharged tangentially to the fan into the outlet passage. In this case the fan is preferably mounted in a generally cylindrical housing in such a way that the gap between the fan and the housing wall increases progressively towards an outlet through which the air and cut material are discharged into the outlet passage.

The fan blades are preferably flat and extend almost parallel to the fan axis, but with a slight offset to provide the necessary suction. Each blade preferably comprises a wider portion which is joined to a narrower axial boss by a tapered portion. The blades which may for example be six in number, are preferably each strengthened by a web extending perpendicular to the fan axis. The webs preferably taper towards their outer ends.

As an alternative to the above-described centrifugal fan, an axial fan may be used.

The tub is preferably rotatably driven by a hydraulic motor (although any other type of motor could also be used) which is in turn driven from the hydraulic system of a tractor e.g. a tractor used to tow the apparatus. The fan and the or each cutter shaft are preferably both driven from the tractor power take-off, and their rotational speeds (and also that of the tub) are carefully chosen. More specifically, it has been found that the optimum length for cut straw and hay is about $2\frac{1}{2}$ to 3 inches (6.35 to 7.62 cm) for animal feed or bedding, although lengths down to one inch or even less may be preferred in some applications. The speed of rotation of the cutter shaft is chosen bearing the desired length in mind. The speed of rotation of the tub is so selected that the bales are carried over the cutting shaft at such a speed that the material is cut at a rate which is fast enough for practical purposes, whilst not being so rapid as to cause cut material to jam around the cutter shaft or to accumulate in the conduit. The slower the rate of rotation of the tub for a given rotational speed of the cutter shaft, the faster is the rate of cut. The speed of rotation of the fan is chosen so that it provides a current of air which is sufficient to convey the cut material away from the cutter shaft and to discharge it out of the machine through the outlet passage, but is not excessive, which could lead to uncontrollable scattering of the cut material, and also blocking of the fan.

One bale cutting and distributing machine embodying the invention will now be described by way of example and with reference to the accompanying drawings, in which:

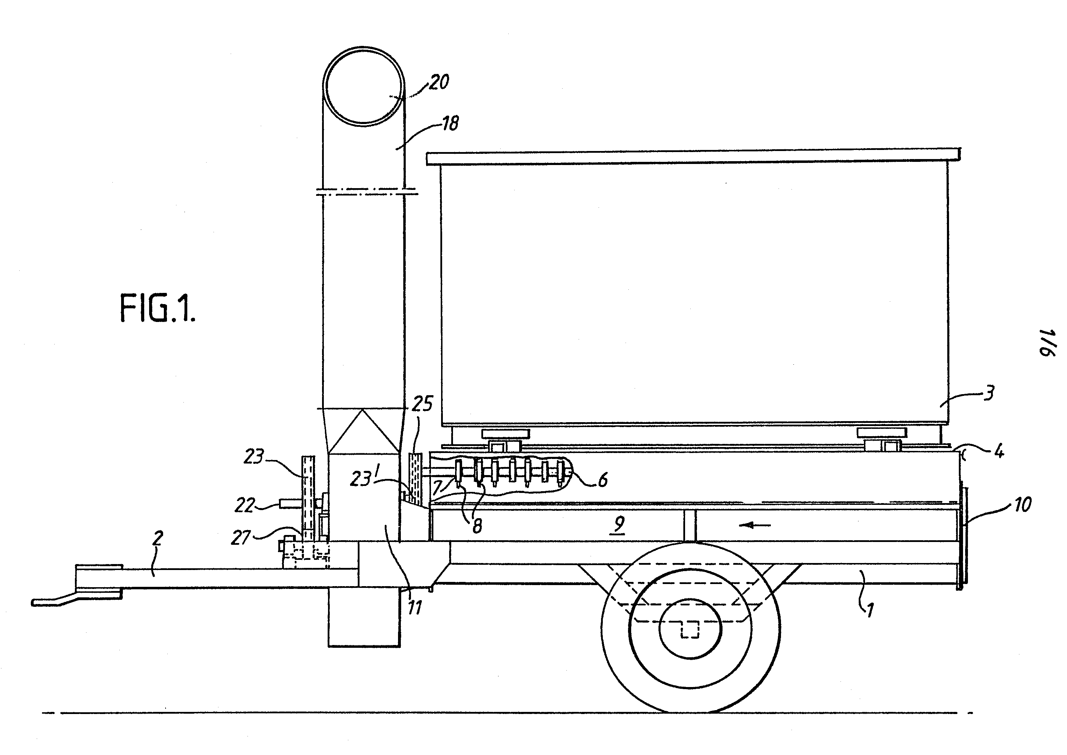

Figure 1 is a side elevation of the machine, partially cut away,

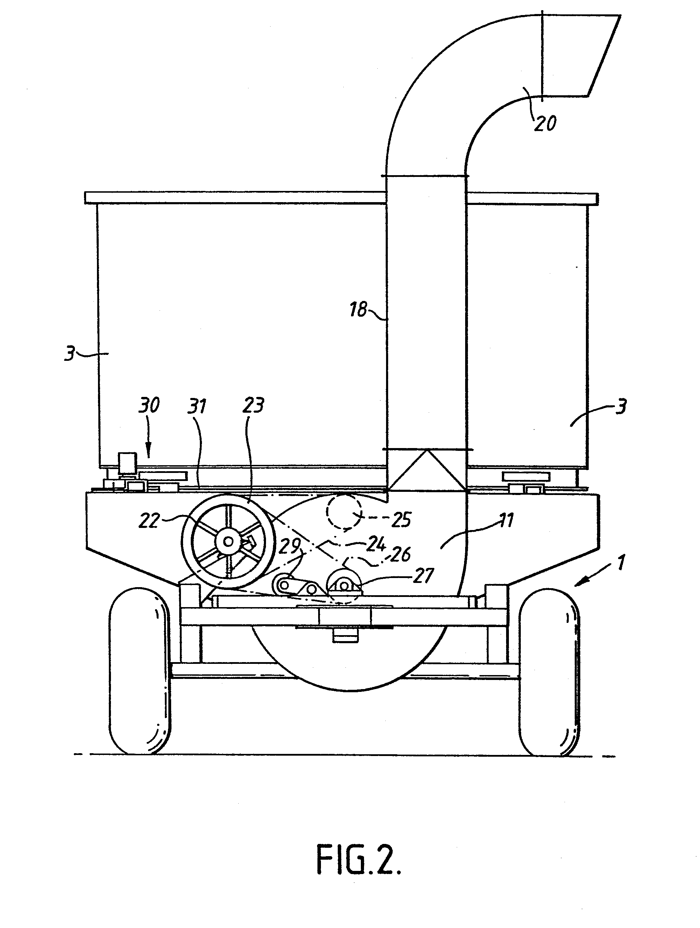

Figure 2 is a front end elevation,

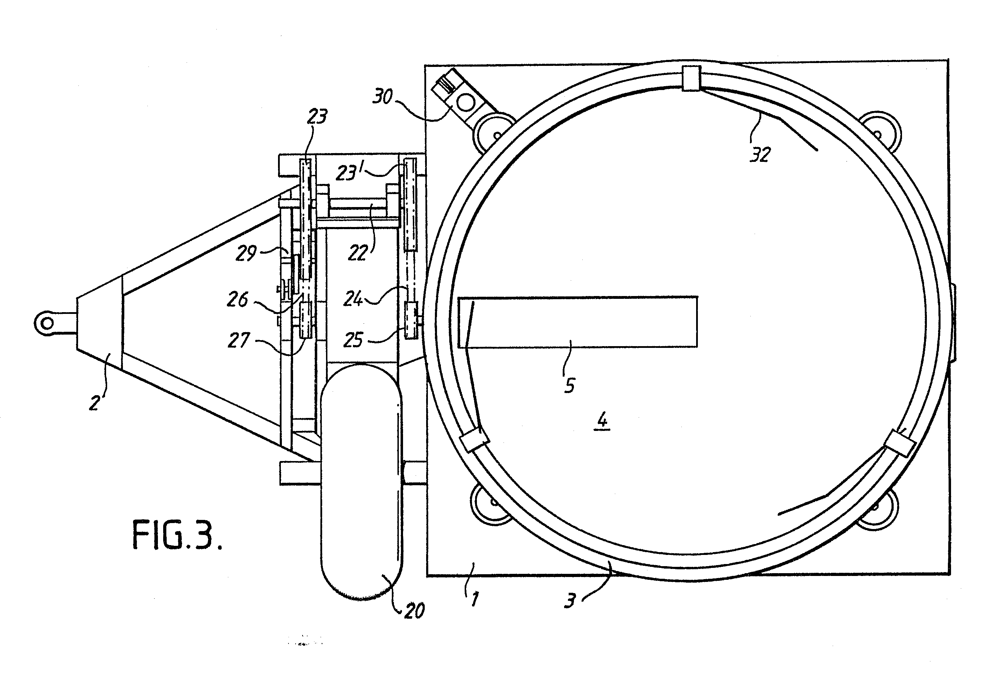

Figure 3 is a plan view,

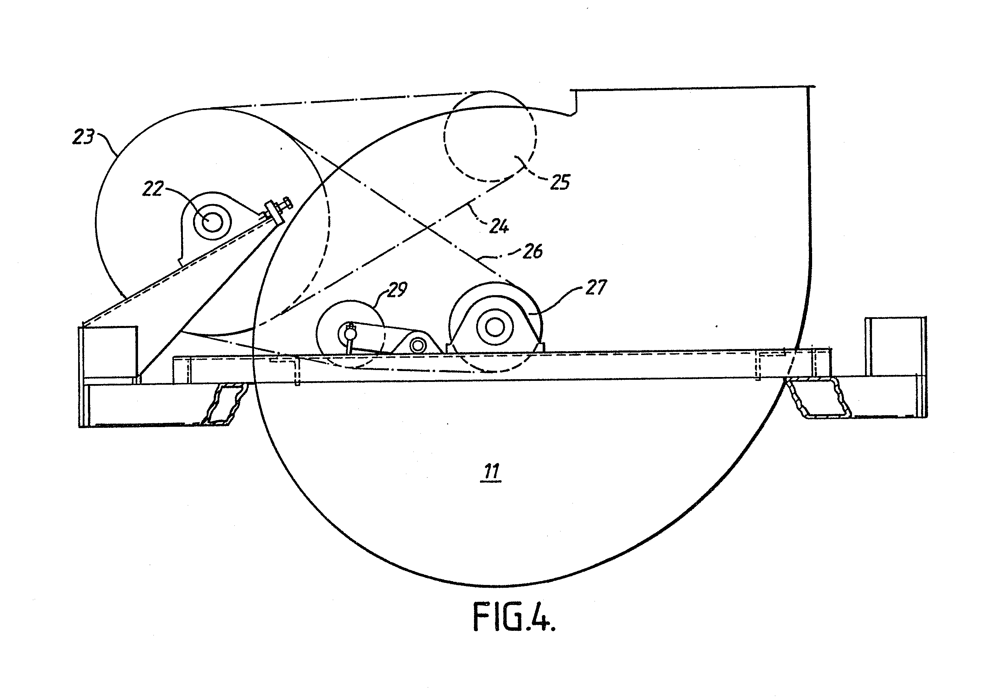

Figure 4 is a detail front elevation showing the fan housing and the drive to the fan and cutting shaft,

Figure 5 shows the positions of the fan within the fan housing,

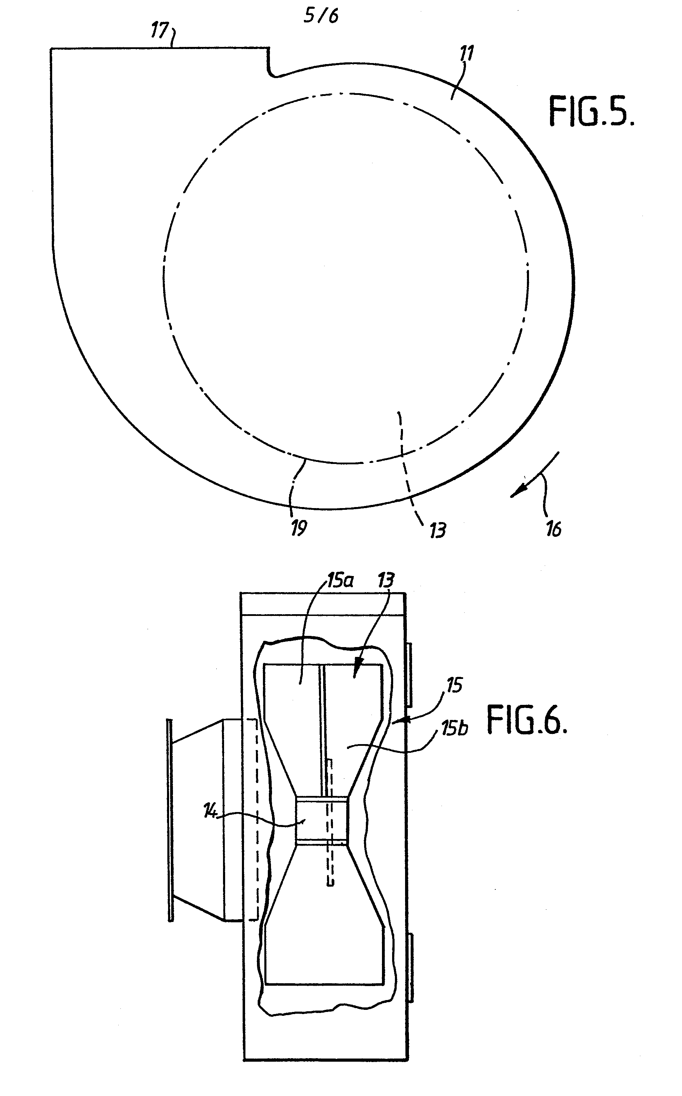

Figure 6 is a side view showing the fan within its housing, and

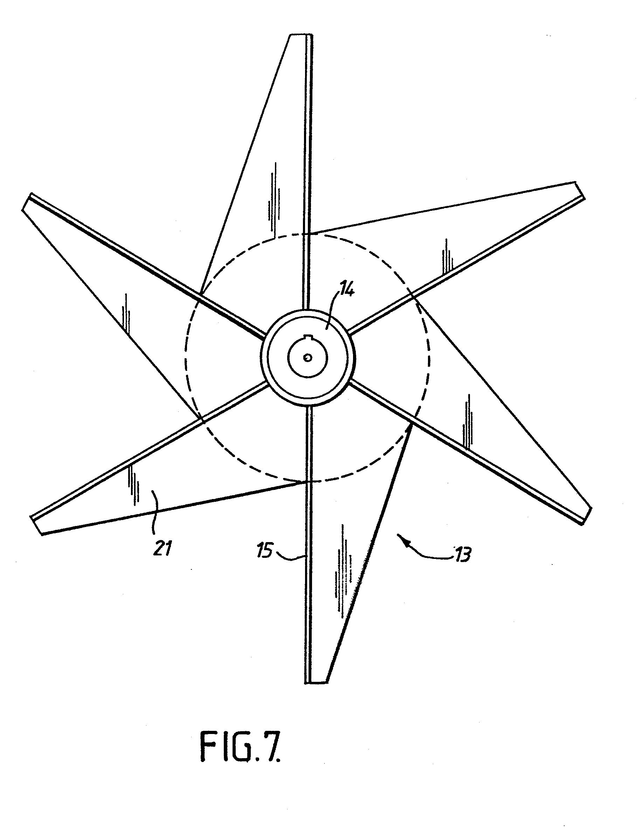

Figure 7 is a front view of the fan itself.

The machine shown consists of a wheeled chassis 1 provided with a tow bar 2 which enables it to be towed behind a conventional agricultrual tractor (not shown). A cylindrical tub 3 for one large round bale or several smaller rectangular ones is mounted towards the back of the chassis for rotation about a vertical axis. The tub has an open bottom and beneath it is a fixed base plate 4 having a radially-extending opening 5. Under the opening is arranged a horizontal cutter shaft 6 provided with a plurality of cutter blades. The blades are mounted on transverse discs 7 spaced along the shaft, each disc having three blades 8 extending outwards and inclined at 120° to one another. An air conduit 9 is located in the chassis and extends parallel to the longitudinal dimension of the chassis from an air intake grille 10 at the rear of the chassis to a fan housing 11 at the front. The cutter shaft 6 and the conduit 9 are parallel, and the cutter shaft is arranged above the conduit so that cut material can fall into the conduit through an opening in the top thereof.

A short connector passage 12 joins the downstream end of the conduit 9 with the fan housing 11 and feeds the air and entrained material into the fan housing 11 in the vicinity of the centre of the fan 13, which is mounted on a boss 14 and rotates about an axis parallel to the longitudinal dimension of the machine. The curved wall of the cylindrical fan housing 11 is spaced from the path 19 traced by the tips of the fan blades 15, and the fan axis is slightly offset relative to the axis of the housing so that this spacing gradually increases in the direction of rotation of the fan (shown by the arrow 16) to the outlet 17. The outlet 17 feeds into a discharge spout 18 having a curved end portion 20. The user can direct the supply of cut straw or hay from the spout in accordance with his requirements.

The fan blades 15 extend almost parallel to the axis of the boss 14, but have a slight set to provide the necessary suction in the conduit 9. Each blade (there are six in total) consists of a wider rectangular end 15a portion joined to the narrower boss 14 by a tapered portion 15b. Each blade is provided with an outwardly-tapering reinforcing web 21.

The machine is driven from the power take-off shaft of a conventional agricultural tractor via the shaft 22 which is rigid with a first large pulley 23 and a second large pulley 23'. A first drive belt 24 operatively connects pulley 23' to a first smaller pulley 25, which is rigid with and drives the cutter shaft 6, and a second drive belt 26 connects the pulley 23 with a second smaller pulley 27, passes over a guide pulley 29, and is rigid with and drives the fan boss 14.

The relative diameters of the various pulleys 23, 23', 25, 27 are such that, when the power take-off shaft of the tractor is rotating at a conventional speed (e.g. 540 rpm) the cutter shaft speed is 2000 to 2500 rpm (preferably 2000 rpm) and the fan speed is 1400 to 1750 rpm (preferably 1500 rpm). This combination provides pieces of cut straw, hay, silage or the like about $2\frac{1}{2}$ to 3 inches (6.35 to 7.62 cm) long. The tub 3 is driven independently through a hydraulic motor 30 mounted on the chassis and actuated by the hydraulic system of the tractor. It drives the tub through a drive chain 31 extending around the lower circumference of the tub. It has been found that a tub speed of 18 to 24 rpm (preferably 20 rpm) gives satisfactory results.

Three equally-spaced gripper plates 32 are also provided inside the tub and are pivotally mounted on the tub wall, so that they swing inwards as the tub rotates and grip a bale or bales within the tub to ensure that the contents rotate with the tub.

The bale or bales may be arranged within the tub so that either a flat surface, or preferably a curved surface of the bale is acted on by the cutting means.

It has been found that this apparatus can handle a wide variety of types of straw, hay or silage in various states of dryness without displaying the problems which are encountered in using bale cutting machines provided with auger conveyors.

CLAIMS:

1.   Cutting and distributing apparatus for bales of straw, hay, silage or the like, comprising a container for one or more bales, cutting means for cutting lengths of straw, hay, silage or the like from the bale or bales, a conduit for conducting the cut lengths away from the cutting means to a fan by means of which they are discharged from the apparatus through an outlet passage, characterised in that the conduit has air inlet means so arranged that the fan draws air into the conduit through the inlet means and the cut lengths are entrained by the resulting air current which conveys them to the fan, whereupon they are blown out through the outlet passage.

2.   Cutting and distributing apparatus for bales according to claim 1, wherein the container is a tub mounted for rotation about a vertical axis, at least one horizontal rotatable cutting shaft provided with cutter blades is located beneath the tub so that the contents of the tub rotate against these cutter blades, characterised in that the said conduit is located alongside or beneath the cutting shaft or shafts so that the lengths but by the blades can fall into the conduit.

3.   Cutting and distributing apparatus according to either preceding claim, wherein the conduit extends parallel to the axis of the fan and is arranged to feed said air current and the entrained cut lengths to the centre portion of the fan.

4. Cutting and distributing apparatus according to any preceding claim wherein the fan is located within a generally cylindrical housing having an axial inlet and a tangential outlet, the housing being so shaped that the gap between the fan housing and the path defined by the tips of the fan blades gradually increases towards the outlet in the direction of rotation of the fan.

5. Cutting and distributing apparatus according to any preceding claim, wherein the fan has a plurality of blades mounted on a common boss, each blade extending in the direction of the fan axis and consisting of an outer portion connected to the boss which is narrower than the outer portion by a tapering portion.

6. Cutting and distributing apparatus according to any of claims 2 to 5, wherein the speeds of rotation of the tub, the cutter shaft, and the fan are such that cut lengths of about 1 to 3 inches (2.54 to 7.62 cm) are discharged from the outlet passage.

7. Cutting and distributing apparatus according to claim 5, wherein each fan blade is slightly inclined to the fan axis in order to provide the required suction in the conduit.

8.   Cutting and distributing apparatus according to claims 5 or 7, wherein each blade is provided with a strengthening web perpendicular to the fan axis and tapering from the boss towards the blade tip.

9.   Cutting and distributing apparatus according to claim 1 and substantially as herein described, with reference to the accompanying drawings.

FIG.1.

FIG.2.

FIG.3.

FIG.4.

0120574

5/6

FIG.5.

FIG.6.

FIG.7.

## DOCUMENTS CONSIDERED TO BE RELEVANT

| Category | Citation of document with indication. where appropriate, of relevant passages | Relevant to claim | CLASSIFICATION OF THE APPLICATION (Int. Cl. ³) |
|---|---|---|---|
| X | US-A-4 158 469 (RISSER)<br>* Column 6, lines 7-68; figures 1-3 * | 1-5 | A 01 F 29/00 |
| E | LANDTECHNIK, vol. 38, no. 11, November 1983, pages 475-478, Lehrte, DE<br>"Geräte zum Auflösen und Zerkleinern von Strohballen - Bauarten - " * Figure 5 * | 1,2 | |
| X | FR-A-2 320 043 (BLAIR)<br>* Page 2, lines 15-38; page 3, figures 1-6 * | 1-5 | |
| A | FR-A-2 500 718 (DEWEY) | | |
| | | | **TECHNICAL FIELDS SEARCHED (Int. Cl. ³)** |
| A | DE-A-2 749 256 (DOBESCH) | | A 01 F |

The present search report has been drawn up for all claims

| Place of search THE HAGUE | Date of completion of the search 25-05-1984 | Examiner VERMANDER R.H. |
|---|---|---|